# EUROPEAN PATENT APPLICATION

(11) **EP 3 447 742 A1**
(43) Date of publication of application: **27.02.2019**
(21) Application number: 16898891.3
(22) Date of filing: 20.04.2016
(51) Int. Cl.: G07F 11/00

(54) **NETWORK INTERACTIVE SYSTEM FOR SELECTING OBJECT FOR SALE**

(71) Applicant: Huang, Ming-Jian, Taichung City 403 (TW)
(72) Inventor: CHU, En-Hsin, Taichung City 403 (TW); HUANG, Yu-Tsen, Taichung City 403 (TW); HUANG, Kuan-Wei, Taichung City 403 (TW); HUANG, Ming-Jian, Taichung City 403 (TW)
(74) Representative: Lang, Christian
(86) International application number: PCT/CN2016/000210
(87) International publication number: WO 2017/181301

(57) **Abstract**

A network interactive system for selecting an object for sale. The system comprises a management server device, at least one portable apparatus, and at least one object-selecting vending machine. The object-selecting vending machine is provided with a network module connected to the internet via a router, such that the portable apparatus of a player can input data received from the management server device into the object-selecting vending machine, and then the object-selecting vending machine compares the same to data acquired from the internet, and transmits, by means of the network module, to the management server device or the portable apparatus of the player data of a purchase of the player. In this way, the present invention enables transmission of game data of a player to a management server device to perform remote management, and increases a fun level of the game to increase financial profits thereof.

## Description

### 1. FIELD OF INVENTION

The present invention relates to interactive entertainment and, more particularly, to a network interactive system for selecting object for sale.

### BACKGROUND OF INVENTION

### 2. RELATED PRIOR ART

A typical doll-clipping machine is a coin-operated machine that requires a person to insert at least one coin therein to start a round of game. It is troublesome for a person to get a coin to start a round of game when the person happens to see a doll-clipping machine and feels like using it. It is more troublesome to get a coin to start a round of game when the person runs out of coin in a previous round of game. Moreover, scores cannot be recorded for statistics. Hence, the doll-clipping machine fails to propel a person to play once and again, trying to break an outstanding record or accumulate enough points for rewards. In addition, it is difficult for a store to manage the inventory of dolls in the doll-clipping machine. Furthermore, it difficult for the store to allure a person by letting the person to play a round of game free of charge unless the store gives away a coin and risks losing the coin.

The present invention is therefore intended to obviate or at least alleviate the problems encountered in prior art.

### SUMMARY OF INVENTION

It is an objective of the present invention to provide a network interactive system for selecting object for sale that allows communication of transaction data and verification data via the internet for remote management.

It is another objective of the present invention to provide a network interactive system that accumulates and records transaction data of a player for rewarding and alluring the player to continue to play.

To achieve the foregoing objectives, the network interactive system includes at least one object-selecting vending machine, at least one portable apparatus, a management server device and two routers. The object-selecting vending machine includes a processing module, a fee calculation module, a product-operating module, a dropped object-detecting module, and a network module. The fee calculation module is electrically connected to the processing module. The product- operating module is electrically connected to the processing module. The operating module is electrically connected to the processing module and operable for controlling the product-operating module. The dropped objet-detecting module is electrically connected to the processing module and adapted for detecting a product captured and dropped onto a chute of the object-selecting vending machine. The network module is electrically connected to the processing module and made with a port. The first router is connected to the port, thereby connecting the object-selecting vending machine to the internet. The portable apparatus includes an activation module and a wireless transmission module electrically connected to the activation module and adapted for communicating data with the network module unit via the internet. The management server device includes a operating module, a storage module and a transmission module. The operating module and the storage module are used to manage data of transactions. The transmission module is electrically connected to the operating module and made with a port. The second router is connected to the port of the management server device, thereby connecting the management server device to the internet.

Other objectives, advantages and features of the present invention will be apparent from the following description referring to the attached drawings.

### BRIEF DESCRIPTION OF DRAWINGS

The present invention will be described via detailed illustration of the preferred embodiment referring to the drawings wherein:
FIG. 1 is a block diagram of a network interactive system for selecting object for sale according to the preferred embodiment of the present invention;
FIG. 2 is a perspective view of an object-selecting vending machine incorporating the network interactive system shown in FIG. 1; and
FIG. 3 is a flow chart of a method for operating the network interactive system shown in FIG. 1

10 object-selecting vending machine
11 processing module
12 fee calculation module
13 object acquisition module
14, 51 operating module
15 dropped object-detecting module
16 display module
18 network module
19, 56 port
30 portable apparatus
31 activation module
32, 52 storage module
35 wireless transmission module
40, 45 router
50 management server device
55 transmission module
121 coin insertion unit
122 card reading unit
123 virtual payment unit

### DETAILED DESCRIPTION OF PREFERRED EMBODIMENT

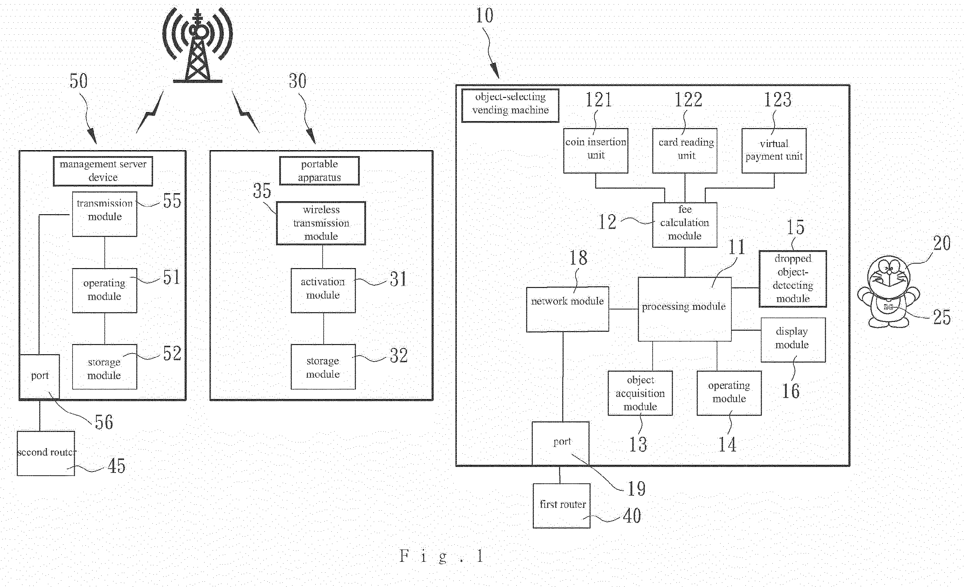

Referring to FIG. 1, a network interactive system for selecting object for sale includes at least one object-selecting vending machine 10, at least one portable apparatus 30 and a management server device 50 according to the preferred embodiment of the present invention. The object-selecting vending machine 10, the portable apparatus 30 and the management server device 50 is in communication of data with one another via a network such as the internet. The management server device 50 is used for back-stage management of transactions that a player does with the object-selecting vending machine 10 for promotion.

The object-selecting vending machine 10 is a doll-clipping machine, a drink-vending machine, washing machine, a dryer or a camera for example. The flowing description will be given to a doll-clipping machine for example. The object-selecting vending machine 10 includes a space 100 for receiving products 20 such as dolls. The object-selecting vending machine 10 further includes a chute (not numbered) via which each of the products 20 can be moved out of the space 100.

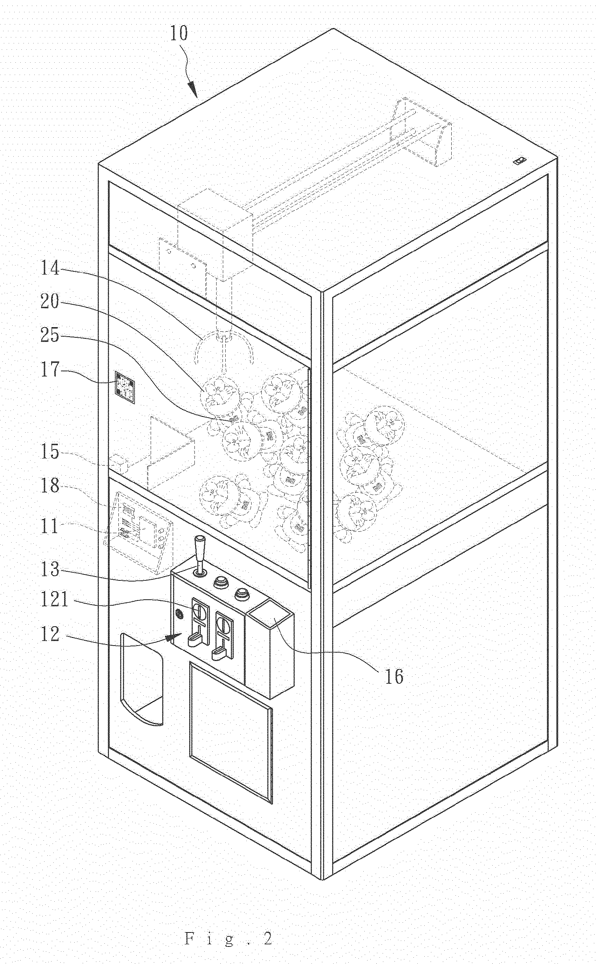

Referring to FIGS. 1 and 2, the object-selecting vending machine 10 includes a processing module 11, a fee calculation module 12, an object ac
quisition module 13, an operating module 14, a dropped object-detecting module 15, a display module 16 and a network module 18. The processing module 11 is electrically connected to the fee calculation module 12, the operating module 14, the object acquisition module 13, the dropped object-detecting module 15, the display module 16 and the network module 18.

The fee calculation module 12 includes at least one coin insertion unit 121, a card reading unit 122 and a virtual payment unit 123. The coin insertion unit 121 allows a player to insert at least one coin therein to initiate the object-selecting vending machine 10. The card reading unit 122 allows a player to use a deposit card or a concession card to use the object-selecting vending machine 10. The virtual payment unit 123 allows a player to pay virtual currency for using the object-selecting vending machine 10 via a wireless network without having to carry any real currency. Moreover, the virtual payment unit 123 allows a player to pay nothing for using the object-selecting vending machine 10 if so agreed by a store in charge of the object-selecting vending machine 10.

The object acquisition module 13 is electrically connected to the operating module 14. Thus, the object acquisition module 13 is operable to move the operating module 14 in the space 100 in a three-dimensional manner. Moreover, the object acquisition module 13 is operable to cause the operating module 14 to capture a selected one of the products 20 stored in the object-selecting vending machine 10.

The dropped object-detecting module 15 is operable to detect that the operating module 14 captures one of the products 20 and drops it onto the chute. The dropped object-detecting module 15 is a feeler lever or an RFID reader for example. Preferably, the dropped object-detecting module 15 is an RFID reader. Accordingly, each of the products 20 is provided with an RFID tag 25 that can be detected by the dropped object-detecting module 15.

The display module 16 is operable to show data of transactions conducted in the object-selecting vending machine 10. The display module 16 is preferably a touch panel operable to enter data.

The label unit 17 carries identity data of the object-selecting vending machine 10. The label unit 17 is a sticker printed with a QR Code and attached to a proper portion of the object-selecting vending machine 10 or a QR Code shown on the display module 16. The label unit 17 can be read by the portable apparatus 30.

The network module 18 is provided with a port 19. A router 40 can be electrically connected to the port 19 to connect the object-selecting vending machine 10 to the internet via the router 40. Thus, the transaction data can be sent to the management server device 50 from the object-selecting vending machine 10 and data can be sent to the object-selecting vending machine 10 from the management server device 50. The router 40 is operated based on cables (Ethernet) or in a wireless manner (Wi-Fi) for example.

The portable apparatus 30 is a smart phone tablet computer with application programs built therein. The portable apparatus 30 includes an activation module 31, a storage module 32 and a wireless transmission module 35.

The activation module 31 is preferably an application program built in the portable apparatus 30. The activation module 31 is used to obtain identity data of a player and identity data of the object-selecting vending machine 10. The identity data of the object-selecting vending machine 10 are provided in several manners. Firstly, the identity data of the object-selecting vending machine 10 are entered to the object-selecting vending machine 10 and shown on the display module 16. Secondly, the identity data of the object-selecting vending machine 10 are carried by a QR code read shown the display module 16. Thirdly, the identity data of the object-selecting vending machine 10 are carried on a QR code printed on a sticker attached to the object-selecting vending machine 10. In the last two cases, the QR code is readable by a camera of the portable apparatus 30. The activation module 31 identifies the player and the portable apparatus 30 to obtain rights vested on the player. Furthermore, the activation module 31 facilitates determination of whether if the object-selecting vending machine 10 is a qualified machine. Then, the activation module 31 communicates data with the object-selecting vending machine 10 to initiate a round of game.

The storage module 32 is used to record the identity data of the player or the transaction data from the management server device 50.

The wireless transmission module 35 is used to receive transaction data of the player from the management server device 50. The wireless transmission module 35 is operable to send transaction data of the player to the management server device 50. The wireless transmission module 35 can be operated in a wireless manner. In such a case, the wireless transmission module 35 is operated according to a communication protocol at least as high as 2G for cell phone communication and connected to the internet via a cell site or a Wi-Fi access point.

The management server device 50 includes an operating module 51, a storage module 52 and a transmission module 55. The storage module 52 is used to store the identity data of the player, the identity data of the object-selecting vending machine 10 and various types of data related to management. The operating module 51 preferably includes a back-stage management program and an interface. The operating module 51 and the storage module 52 are used together to collect data of the player for statistics and management by a manager of the vending system.

The transmission module 55 is electrically connected to the operating module 51 at an end. The transmission module 55 is electrically connected to a port 56 at another end.

A router 45 is electrically connected to the port 56. The router 45 is operated by cables (Ethernet) or in a wireless manner (Wi-Fi). The management server device 50 is connected to the internet via the router 45. Thus, the management server device 50, the portable apparatus 30 and the vending machine 10 are in communication of data via the internet.

Referring to FIGS. 1 through 3, in operation, the player uses the activation module 31 of the portable apparatus 30 to identify him- or herself and identify the object-selecting vending machine 10. By the connection to the cell phone communication system (2G or higher) or the Wi-Fi, the management server device 50 is allowed to access to the transaction data of the player. Thus, the player is allowed to use the portable apparatus 30 to enter his or her identity data and the identity data of the object-selecting vending machine 10 to the management server device 50 for management. Alternatively, the player uses the virtual currency deposited in the management server device 50 to log in the object-selecting vending machine 10, and the network module 18 connects the object-selecting vending machine 10 to the management server device 50 to verify the qualification of the object-selecting vending machine 10, thereby obtaining allowance for the player to use the object-selecting vending machine 10, without having to use any coin to start a round of game with the object-selecting vending machine 10. The transaction data of the player can be collected for statistics and management such as rewarding as means for promotion.

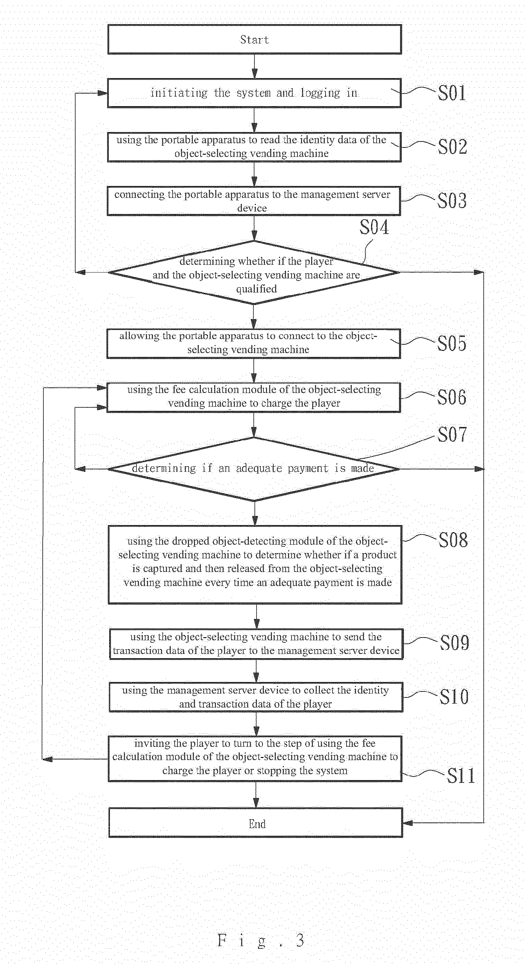

Referring to FIG. 3, the operation of the network interactive system will be described. To take part in the network interactive system, the player has to install the related application programs in the portable apparatus 30 so that they player can communicate data with the management server device 50 and react with the object-selecting vending machine 10. Accordingly, corresponding application programs have to be installed in the management server device 50.

At S01, the player initiates a round of game. The player turns on the activation module 31 of the portable apparatus 30 thereof, i.e., the application program for the network interactive system. Then, the player uses existing membership to log in if the player has registered for membership. Otherwise, the player registers for new membership.

At S02, the portable apparatus 30 reads the identity data of the object-selecting vending machine 10. After logging in, the player uses the interface of the portable apparatus 30 enter the identity data such as an identity number of the object-selecting vending machine 10. The identity data is preferably an identity number. Alternatively, the player uses the portable apparatus 30 to read the label unit 17 of the object-selecting vending machine 10. As mentioned above, the label unit 17 is a sticker that carries a QR Code or an image of a QR Code shown on the display module 16 for example. Thus, the portable apparatus 30 obtains the identity data of the object-selecting vending machine 10.

At S03, the portable apparatus 30 is connected to the management server device 50. After obtaining the identity data of the player and that of the object-selecting vending machine 10, the activation module 31 of the portable apparatus 30 instructs the wireless transmission module 35 to communicate data with the transmission module 55 of the management server device 50 in a wireless manner. The data are sent to the storage module 52 of the management server device 50.

At S04, the management server device 50 determines whether if the object-selecting vending machine 10 is qualified and whether if the player is qualified. The management server device 50 uses the management program of the operating module 51 to compare the identity data from the portable apparatus 30 with the identity data stored therein to determine whether each of them is qualified. The process returns to S01 if the player is not qualified. The process ends and the portable apparatus 30 shows a nearest object-selecting vending machine 10 based on a built-in map if the object-selecting vending machine 10 is not qualified. The process goes to S05 if both of the player and the object-selecting vending machine 10 are qualified.

At S05, a signal of successful connection is sent. After both of the player and the object-selecting vending machine 10 are determined to be qualified, the management server device 50 sends a confirming signal to the portable apparatus 30 and the object-selecting vending machine 10. The confirming signal is a serial number of a round of game free of charge. The portable apparatus 30 receives the serial number, and the vending machine 10 receives a verifying code.

At S06, the fee calculation module 12 of the object-selecting vending machine 10 charges. After the portable apparatus 30 of the player is connected to the object-selecting vending machine 10, the object-selecting vending machine 10 uses the fee calculation module 12 to charge. Payments can be made by inserting at least one coin in the coin insertion unit 121 or by having a deposit card read by the card reading unit 122. Alternatively, payments can be made by previous deposit in the management server device 50 or through a third party. After obtaining a proof of a payment, the portable apparatus 30 enter the proof of payment to the object-selecting vending machine 10 in which the proof of payment and the verifying code are used for authentication. Alternatively, the management server device 50 gives a free-of-charge serial number to the object-selecting vending machine 10 and the portable apparatus 30, and the player enters the free-of-charge serial number to the object-selecting vending machine 10 for authentication before the player is allowed to play a round of game free of charge.

At S07, the fee calculation module 12 of the object-selecting vending machine 10 determines whether if the payment is adequate. After receiving the payment, the fee calculation module 12 of the object-selecting vending machine 10 determines whether the payment is adequate or the round of game is free of charge. The system allows the player to decide to return to S06 for another payment or end the process if the payment is inadequate. The process turns to S08 if the payment is adequate.

At S08, the player uses the object acquisition module 13 of the object-selecting vending machine 10 start a round of game. The player uses the object acquisition module 13 of the object-selecting vending machine 10 to control the operating module 14 to capture or clip one of the products 20.

At S09, the dropped object-detecting module 15 of the object-selecting vending machine 10 determines whether if a product 20 is captured and dropped onto the chute. After each payment, the dropped object-detecting module 15 of the object-selecting vending machine 10 detects whether if a product 20 is captured and dropped onto the chute. As mentioned above, the dropped object-detecting module 15 could be a feeler lever actuated by a product 20 that is captured and dropped onto the chute. Preferably, the dropped object-detecting module 15 is an RFID reader for reading the RFID tag 25 of the dropped object-detecting module 15 to determine which of the products 20 is captured and dropped onto the chute.

At S10, the object-selecting vending machine 10 sends data of the transaction to the management server device 50. The dropped object-detecting module 15 of the object-selecting vending machine 10 determines whether if the product 20 has been taken away. The processing unit 11 sends the result of the determination to the management server device 50 through the network module 18.

At S11, the management server device 50 collects membership data of the player for management. After the transmission module 55 of the management server device 50 receives the game data and the transaction data from the portable apparatus 30 of the player or the object-selecting vending machine 10, the operating module 51 collects the data for statistics, analysis, comparison and management, and results are recorded in the storage module 52 for promotion or rewarding in the future. The system allows the player to turn S06 for another payment or ending the process.

The object-selecting vending machine 10, the portable apparatus 30 and the management server device 50 can be connected to one another via the internet. Thus, the game data of the portable apparatus 30 can be sent to the management server device 50 in a wireless manner. Via the network module 18, the game data of the object-selecting vending machine 10 can be sent to the management server device 50 for remote management. Advantageously, the vending system of the present invention allows a player to accumulate and send his or her game data to the management server device 50, and allows a store to collect the data in a remote manner for statistics for promotion or rewarding in the future. Hence, the vending system of the present invention is more appealing than the prior art.

The present invention has been described via illustration of the preferred embodiment. Those skilled in the art can derive variations from the preferred embodiment without departing from the scope of the present invention. Therefore, the preferred embodiment shall not limit the scope of the present invention defined in the claims.

## Claims

1. An network interactive system for selecting object for sale comprising:
at least one object-selecting vending machine (10) comprising a processing unit (11), a fee calculation module (12) electrically connected to the processing unit (11), an operating module (14) electrically connected to the processing unit (11), an object acquisition module (13) electrically connected to the processing unit (11) and operable for controlling the operating module (14), a dropped object-detecting module (15) electrically connected to the processing unit (11) and adapted for detecting a product captured and dropped onto a chute of the object-selecting vending machine (10), and a network module (18) electrically connected to the processing unit (11) and made with a port (19);
a first router (40) connected to the port (19), thereby connecting the object-selecting vending machine (10) to the internet;
at least one portable apparatus (30) comprising an activation module (31) and a wireless transmission module (35) electrically connected to the activation module (31) and adapted for communicating data with the network module (18) via the internet;
a management server device (50) comprising an operating module (51), a storage module (52) adapted for cooperating with the operating module (51) to manage data of transactions, and a transmission module (55) electrically connected to the operating module (51) and made with a port (56); and
a second router (45) connected to the port (56) of the management server device (50), thereby connecting the management server device (50) to the internet.

2. The network interactive system for selecting object for sale according claim 1,
wherein the fee calculation module (12) comprises at least one unit selected from the group consisting of a coin insertion unit (121), a card reading unit (122) and a virtual payment unit (123).

3. The network interactive system for selecting object for sale according claim 1,
wherein the dropped object-detecting module (15) comprises an RFID reader for reading an RFID tag (25)
attached to a product (20).

4. The network interactive system for selecting object for sale according claim 1, wherein the vending machine (10) further comprises a display module (16) electrically connected to the processing unit (11) and adapted for showing the transaction data and game data.

5. The network interactive system for selecting object for sale according claim 1, wherein the vending machine (10) further comprises a label unit (17) provided thereon and adapted for identification thereof.

6. The network interactive system for selecting object for sale according claim 1, wherein the portable apparatus (30) is a programmable device selected from the group consisting of a smart phone and tablet computer.

7. The network interactive system for selecting object for sale according claim 1, wherein one of the first and second routers (40, 45) is based on cables.

8. The network interactive system for selecting object for sale according claim 1, wherein one of the first and second routers (40, 45) is operated in a wireless manner.
